# FASCICULE DE BREVET EUROPEEN

(11) **EP 0 872 371 B1**
(45) Date de publication et mention de la délivrance du brevet: **17.10.2001**
(21) Numéro de dépôt: 98106456.1
(22) Date de dépôt: 08.04.1998
(51) Int. Cl.: B60K 15/05

(54) **Dispositif de remplissage d'un réservoir de carburant pour un véhicule automobile comportant des moyens perfectionnés de verrouillage d'un volet d'obturation**
Einfüllvorrichtung für einen Kraftstofftank eines Kraftfahrzeuges mit Verriegelung des Tankverschlusses
Filler device for a fuel tank of motor vehicle comprising means for locking fuel tank inlet cap

(30) Priorité: 14.04.1997 FR 9704657
(43) Date de publication de la demande: 21.10.1998
(73) Titulaire: Compagnie de Matériel et d'Equipements Techniques C.O.M.E.T., 60300 Senlis (FR)
(72) Inventeur: Romanek, Christian, 60430 Noailles (FR); Galland, Didier, 60590 Eragny/Epte (FR)
(74) Mandataire: Rinuy, Santarelli

(56) Documents cités:
- BE-B- 523 095
- FR-A- 2 710 721
- US-A- 4 917 404
- US-A- 5 080 421

## Description

L'invention concerne un dispositif de remplissage d'un réservoir de carburant pour un véhicule automobile comportant des moyens perfectionnés de verrouillage d'un volet d'obturation.

L'invention concerne plus particulièrement un dispositif de remplissage d'un réservoir de carburant pour un véhicule automobile, du type comportant une tête de remplissage qui est munie d'un orifice supérieur pour l'introduction dans le dispositif d'une lance d'un pistolet de ravitaillement, du type dans lequel le dispositif comporte une trappe externe qui est mobile entre une position de condamnation, dans laquelle elle masque l'orifice supérieur, et une position de ravitaillement dans laquelle elle libère l'accès à l'orifice supérieur, du type dans lequel l'orifice supérieur est destiné à être obturé par un volet qui est mobile par rapport au dispositif entre une position ouverte et une position fermée dans laquelle il obture l'orifice supérieur du dispositif, et du type dans lequel il est prévu des moyens de verrouillage du volet en position fermée.

Il est par exemple connu d'utiliser des dispositifs de remplissage dans lesquels l'obturation de l'orifice supérieur est assurée par un volet qui est monté articulé sur le dispositif, à l'intérieur de la tête de remplissage, et qui est destiné à s'effacer vers l'intérieur de la tête de remplissage au cours du ravitaillement.

Le volet est rappelé élastiquement en position fermée par un ressort.

Il a déjà été proposé de munir un tel volet d'un dispositif de verrouillage en position fermée qui permette notamment d'éviter que des voleurs ne puissent prélever le carburant contenu dans le réservoir.

Très souvent, la tête de remplissage et donc le volet d'obturation sont dissimulés au fond d'un logement, qui est aménagé en creux par rapport à la carrosserie du véhicule, qui est délimité généralement par un bol et qui est refermé par une trappe dont une face externe affleure au niveau de la surface externe du panneau de carrosserie du véhicule dans lequel débouche le dispositif de remplissage.

Dans une telle configuration, on préfère souvent assurer la protection contre le vol du carburant en munissant la trappe de moyens de verrouillage en position de condamnation. Dans cette position, la trappe interdit en effet tout accès à l'orifice supérieur de la tête de remplissage et donc tout accès au réservoir.

Toutefois, dans tous les cas, les moyens de verrouillage du volet ou de la trappe sont destinés à être commandés par une centrale électronique de fermeture qui commande par ailleurs le verrouillage des portières du véhicule.

Il en résulte que, selon ces conceptions connues, le volet d'obturation n'est effectivement verrouillé que lorsque les portières sont verrouillées, c'est-à-dire lorsque le véhicule est à l'arrêt en stationnement. Cela permet de répondre de manière satisfaisante à la nécessite de protéger le réservoir de carburant contre le vol.

Toutefois, lorsque le véhicule roule, les portières sont généralement en position décondamnée et les moyens de verrouillage de la trappe ou du volet le sont aussi.

Or, dans un tel cas, le volet d'obturation peut être amené à s'ouvrir, par exemple au cours d'un choc violent, laissant alors au carburant la possibilité de s'échapper du réservoir.

L'invention a donc pour objet de proposer des moyens de verrouillage du volet d'obturation qui évitent l'ouverture intempestive du volet, notamment en cas d'accident, et qui soient donc indépendants d'éventuels moyens complémentaires de verrouillage centralisé contre le vol.

Par ailleurs, l'invention a pour objet de proposer des moyens de verrouillage qui ne nécessitent pas une action positive spécifique de l'utilisateur pour être déverrouillés lorsqu'il souhaite effectuer le ravitaillement de son véhicule.

Dans ce but, l'invention propose un dispositif de remplissage d'un réservoir de carburant pour un véhicule automobile, du type comportant une tête de remplissage qui est munie d'un orifice supérieur pour l'introduction dans le dispositif d'une lance d'un pistolet de ravitaillement, du type dans lequel le dispositif comporte une trappe externe qui est mobile entre une position de condamnation dans laquelle elle masque l'orifice supérieur et une position de ravitaillement dans laquelle elle libère l'accès à l'orifice supérieur, du type dans lequel l'orifice supérieur est destiné à être obturé par un volet qui est mobile par rapport au dispositif entre une position ouverte et une position fermée dans laquelle il obture l'orifice supérieur du dispositif, et du type dans lequel il est prévu des moyens de verrouillage du volet en position fermée, caractérisé en ce que les moyens de verrouillage du volet sont commandés par la trappe pour provoquer le verrouillage du volet lorsque la trappe est en position de condamnation et pour provoquer le déverrouillage du volet lorsque la trappe est en position de ravitaillement.

Selon d'autres caractéristiques de l'invention :
- les moyens de verrouillage comportent un pêne qui-est monté mobile par rapport à la tête de remplissage du dispositif entre une position de déverrouillage et une position de verrouillage dans laquelle le pêne comporte une extrémité active qui est engagée dans un logement correspondant du volet ;
- le pêne est rappelé élastiquement vers sa position de verrouillage ;
- le pêne est articulé sur la tête de remplissage ;
- le volet est articulé autour d'un axe sensiblement perpendiculaire à l'axe de l'orifice supérieur, l'extrémité active du pêne est portée par un tronçon du pêne qui est agencé sensiblement radialement par rapport à l'orifice supérieur, et le pêne comporte un bras de commande qui est agencé du côté opposé au tronçon radial par rapport à l'axe d'articulation du pêne ;
- la trappe agit sur le pêne par l'intermédiaire d'un doigt qui est mobile entre une position de condamnation et une position de décondamnation dans laquelle il agit sur le pêne pour le solliciter vers sa position de déverrouillage ;
- le doigt mobile est monté coulissant selon une direction perpendiculaire à l'axe d'articulation du pêne ;
- la trappe est articulée sensiblement autour d'un axe perpendiculaire à la direction de coulissement du doigt ;
- le doigt coulissant est ramené élastiquement vers sa position de condamnation et il est sollicité vers sa position de décondamnation par la trappe lorsqu'elle est amenée vers sa position de ravitaillement ;
- le doigt coulissant et la trappe sont montés sur un bol qui est fixé sur la carrosserie du véhicule et au fond duquel débouche l'orifice supérieur de la tête de remplissage.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en coupe axiale d'un dispositif de remplissage conforme aux enseignements de l'invention comportant des moyens de verrouillage du volet en position fermée ;
- la figure 2 est une vue schématique en section selon la ligne 2-2 de la figure 1 illustrant plus particulièrement les moyens de verrouillage du volet lorsque celui-ci est verrouillé en position fermée ;
- la figure 3 est une vue schématique en section selon la ligne 3-3 de la figure 2 ; et
- les figures 4 et 5 sont des vues similaires à celles des figures 2 et 3 dans lesquelles la trappe est représentée en position de ravitaillement et dans lesquelles les moyens de verrouillage sont déverrouillés.

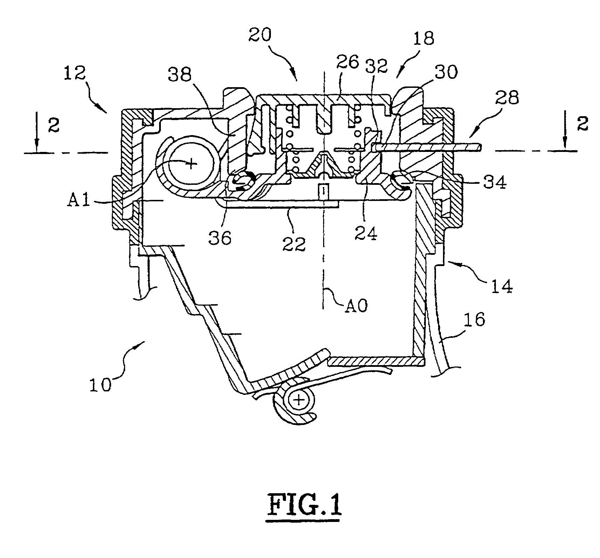

On a représenté sur la figure 1 un dispositif 10 de remplissage d'un réservoir de carburant (non représenté) de véhicule automobile.

Le dispositif 10 comporte notamment une tête de remplissage 12 qui est reliée à l'extrémité supérieure 14 d'une tubulure de remplissage 16, laquelle débouche par son extrémité opposée dans le réservoir de carburant. La tête de remplissage 12 comporte un orifice supérieur 18 qui est prévu pour recevoir par exemple la lance d'un pistolet de ravitaillement afin de remplir le réservoir de carburant.

De manière connue, cet orifice supérieur 18 est destiné à être obturé par un volet 20 qui est articulé autour d'un axe A1 perpendiculaire à l'axe général A0 de la tête de remplissage 12, de l'orifice supérieur 18 et de la tubulure 16. Le volet 20 est destiné à s'escamoter en position ouverte vers l'intérieur de la tête de remplissage 12 et il est ramené élastiquement vers sa position fermée représentée sur la figure 1 par un ressort de rappel à action angulaire 22.

Dans l'exemple de réalisation de l'invention qui est représenté sur la figure 1, le volet 20 est réalisé en deux parties inférieure 24 et supérieure 26 qui sont susceptibles de coulisser axialement l'une par rapport à l'autre selon la direction axiale de l'orifice supérieur 18, et il est muni par ailleurs d'un ensemble de clapets permettant de réguler la pression à l'intérieur du dispositif de remplissage 10. Ces caractéristiques sont respectivement décrites de manière détaillée dans les documents FR-A-2 753 139 et FR-A-2 753 138 auxquelles on se référera utilement pour connaître de manière précise la structure et le fonctionnement du volet 20.

Toutefois, l'invention objet de la présente demande peut être mise en oeuvre avec tout type de volet mobile, et par exemple avec un volet monobloc articulé autour de l'axe A1.

En effet, le dispositif de remplissage 10 ici représenté comporte un pêne de verrouillage 28 qui s'étend au travers de la tête de remplissage 12 et dont une extrémité active 30 est reçue, lorsque le pêne 28 est en position de verrouillage représentée à la figure 1, dans un logement correspondant 32 aménagé dans le volet 20, en l'occurrence dans la partie inférieure 24 de celui-ci.

Le pêne de verrouillage 28 empêche alors le volet 20 de quitter sa position fermée dans laquelle la partie inférieure 24 du volet 20 est en appui, par l'intermédiaire d'un joint d'étanchéité annulaire 34, contre le bord inférieur 36 d'une douille axiale 38 de la tête d'entraînement 12 qui délimite l'orifice supérieur 18.

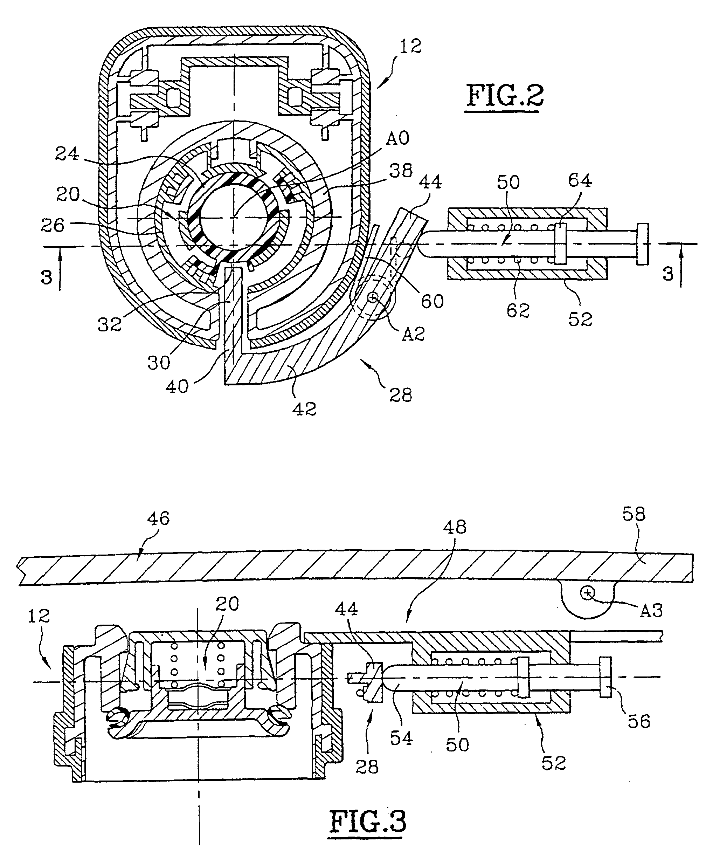

Comme on peut le voir plus particulièrement sur la figure 2, le pêne de verrouillage 28 est agencé à l'extérieur de la tête de remplissage 12, sur le côté de celle-ci, et il est articulé autour d'un axe A2 sensiblement parallèle à l'axe A0 de l'orifice supérieur 18. La partie active 30 du pêne 28 est portée par un tronçon 40 du pêne 28 qui s'étend sensiblement selon une direction radiale par rapport à l'orifice 18 et par rapport au volet 20. Le tronçon radial 40 est porté à l'extrémité libre d'un tronçon en arc de cercle 42 qui longe le côté de la tête de remplissage 12.

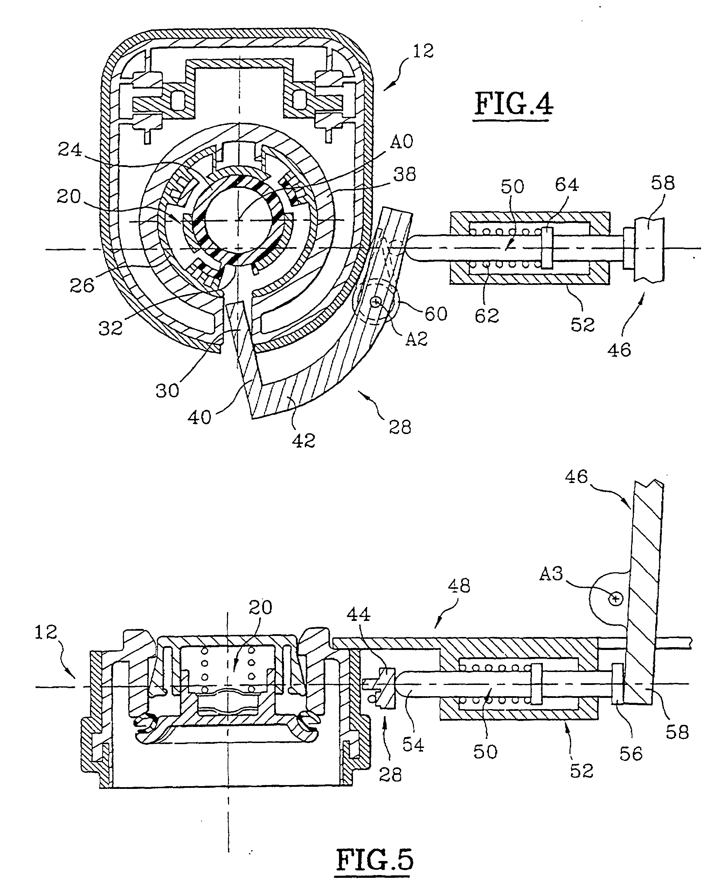

De l'autre côté du tronçon en arc de cercle 42 et du tronçon radial 40 par rapport à l'axe d'articulation A2, le pêne 28 comporte un bras arrière de commande 44 sur lequel il est possible d'agir pour faire pivoter le pêne 28 autour de son axe d'articulation A2, dans le sens anti-horaire en considérant les figures 2 et 4, de manière à ce que l'extrémité active 30 du tronçon radial 40 soit dégagée du logement correspondant 32 du volet 20, ainsi que cela est représenté sur la figure 4.

Conformément aux enseignements de l'invention, la commande du verrouillage et du déverrouillage du volet 20, et donc la commande du pêne 28, est assurée par une trappe 46 qui est montée pivotante autour d'un axe A3 par rapport à un panneau de carrosserie du véhicule.

En effet, la tête de remplissage 12 est généralement agencée dans un renfoncement par rapport au panneau de carrosserie. Ce renfoncement est délimité par un bol 48 fixé sur le panneau de carrosserie et il est refermé par la trappe 46 lorsqu'elle est dans une position de condamnation dans laquelle la trappe 46 s'étend sensiblement parallèlement au panneau de carrosserie, de manière à dissimuler la tête de remplissage 12 ainsi que cela est représenté sur la figure 3.

La trappe 46 peut être amenée vers une position de ravitaillement dans laquelle elle est écartée de la carrosserie et dans laquelle elle libère l'accès à la tête de remplissage 12 et au volet d'obturation 20, ainsi que cela est représenté sur la figure 5.

Selon un deuxième aspect de l'invention, la trappe 46 agit sur le pêne 28 par l'intermédiaire d'un doigt coulissant 50 qui est monté à coulissement dans un boîtier de guidage 52 porté par le bol 48, selon une direction perpendiculaire à la fois aux axes A2 et A3 d'articulation respectivement du pêne 28 et de la trappe 46. Toutefois, on peut prévoir que la trappe 46 agisse directement sur le pêne 28 pour provoquer le déverrouillage du volet 20.

Le doigt coulissant 50 possède une extrémité longitudinale avant 54 qui est destinée à venir en appui contre le bras de commande 44 du pêne 28 et une extrémité longitudinale arrière 56 sur laquelle agit la trappe 46.

Comme on peut le voir sur les figures 3 et 5, le pêne 28 et le doigt 50 s'étendent sensiblement dans un plan perpendiculaire à l'axe A0 de l'orifice supérieur 18.

La trappe 46, qui est généralement réalisée sous la forme d'une plaque, comporte une portion arrière 58 agencée de l'autre côté de l'axe A3 d'articulation de la trappe 46 par rapport à une portion principale de celle-ci de telle sorte que, lorsque la portion principale de la trappe 46 est amenée vers l'extérieur vers sa position de ravitaillement, la portion arrière 58 de la trappe 46 pivote vers l'intérieur du renfoncement délimité par le bol 48 et est alors susceptible d'agir sur l'extrémité longitudinale arrière 56 du doigt coulissant 50 pour déplacer ce dernier vers l'avant. Le doigt 50, en prenant appui contre le bras de commande 44 du pêne 28, provoque le déverrouillage du volet 20 qui peut alors être amené vers sa position ouverte pour effectuer le ravitaillement du réservoir.

Comme on peut le voir sur les figures, le pêne 28 est ramené élastiquement vers sa position de verrouillage par un ressort de rappel à action angulaire 60.

Le doigt de verrouillage 52 est lui ramené longitudinalement vers une position arrière de décondamnation par un ressort hélicoïdal de compression 62 qui est agencé dans le boîtier de guidage 52 et qui agit contre un collet radial 64 du doigt coulissant 50.

Ainsi, lorsque le ravitaillement est terminé, le volet 20, qui est forcé en position ouverte par la lance du pistolet lorsqu'elle est introduite dans la tête de remplissage 20, est ramené vers sa position fermée.

Lorsque l'utilisateur referme la trappe 46, le doigt 50 regagne sa position de décondamnation et libère le pêne 28 dont l'extrémité active 30 s'engage de nouveau automatiquement dans le logement 32 du volet 20 qui s'est précédemment refermé.

Eventuellement, lorsque la trappe 46 est dans sa position de condamnation représentée à la figure 3, il est possible que le doigt coulissant 50 ne soit pas au contact du bras de commande 44 du pêne 28.

Le dispositif 10 peut bien entendu comporter un dispositif complémentaire (non représenté) de verrouillage de la trappe 46 en position de condamnation, par exemple commandé par un actuateur électromagnétique. Le verrouillage du volet pendant les phases de roulage du véhicule est assuré, grâce au dispositif selon l'invention, sans faire appel à un deuxième actuateur.

Avantageusement, on prévoit que le doigt 50, son boîtier de guidage 52 et la trappe 46 soient portés par la trappe 46 pour former un ensemble susceptible d'être monté depuis l'extérieur sur le panneau de carrosserie.

Au contraire, la tubulure 16, la tête de remplissage 12, le volet 20 et le pêne 28 forment un deuxième ensemble solidaire qui est susceptible d'être monté du côté interne du panneau de carrosserie.

## Revendications

1. Dispositif de remplissage d'un réservoir de carburant pour un véhicule automobile, du type comportant une tête de remplissage (12) qui est munie d'un orifice supérieur (18) pour l'introduction dans le dispositif (10) d'une lance d'un pistolet de ravitaillement, du type dans lequel le dispositif (10) comporte une trappe externe (46) qui est mobile entre une position de condamnation dans laquelle elle masque l'orifice supérieur (18) et une position de ravitaillement dans laquelle elle libère l'accès à l'orifice supérieur (18), du type dans lequel l'orifice supérieur (18) est destiné à être obturé par un volet (20) qui est mobile par rapport au dispositif (10) entre une position ouverte et une position fermée dans laquelle il obture l'orifice supérieur du dispositif (10), et du type dans lequel il est prévu des moyens de verrouillage (28) du volet (20) en position fermée,
**caractérisé en ce que** les moyens de verrouillage (28) du volet (20) sont commandés par la trappe (46) pour provoquer le verrouillage du volet (20) lorsque la trappe (46) est en position de condamnation et pour provoquer le déverrouillage du volet (20) lorsque la trappe (46) est en position de ravitaillement.

2. Dispositif de remplissage selon la revendication 1, **caractérisé en ce que** les moyens de verrouillage comportent un pêne (28) qui est monté mobile par rapport à la tête de remplissage (12) du dispositif (10) entre une position de déverrouillage et une position de verrouillage dans laquelle le pêne (28) comporte une extrémité active (30) qui est engagée dans un logement correspondant (32) du volet (20).

3. Dispositif de remplissage selon la revendication 2, **caractérisé en ce que** le pêne (20) est rappelé élastiquement vers sa position de verrouillage.

4. Dispositif de remplissage selon l'une des revendications 1 ou 2, **caractérisé en ce que** le pêne (28) est articulé sur la tête de remplissage (12).

5. Dispositif de remplissage selon la revendication 4, **caractérisé en ce que** le volet (20) est articulé autour d'un axe (A1) sensiblement perpendiculaire à l'axe (A0) de l'orifice supérieur (18), **en ce que** l'extrémité active (30) du pêne (28) est portée par un tronçon (40) du pêne (28) qui est agencé sensiblement radialement par rapport à l'orifice supérieur (18), et **en ce que** le pêne (28) comporte un bras de commande (44) qui est agencé du côté opposé au tronçon radial (40) par rapport à l'axe d'articulation (A2) du pêne (28).

6. Dispositif de remplissage selon l'une quelconque des revendications précédentes, **caractérisé en ce que** la trappe (46) agit sur le pêne (28) par l'intermédiaire d'un doigt (50) qui est mobile entre une position de condamnation et une position de décondamnation dans laquelle il agit sur le pêne (28) pour le solliciter vers sa position de déverrouillage.

7. Dispositif de remplissage selon la revendication 6 prise en combinaison avec la revendication 4, **caractérisé en ce que** le doigt mobile (50) est monté coulissant selon une direction perpendiculaire à l'axe d'articulation (A2) du pêne (28).

8. Dispositif de remplissage selon la revendication 7, **caractérisé en ce que** la trappe (46) est articulée sensiblement autour d'un axe (A3) perpendiculaire à la direction de coulissement du doigt (52).

9. Dispositif de remplissage selon l'une quelconque des revendications précédentes 6 ou 7, **caractérisé en ce que** le doigt coulissant (50) est ramené élastiquement vers sa position de condamnation et **en ce qu'**il est sollicité vers sa position de décondamnation par la trappe (46) lorsqu'elle est amenée vers sa position de ravitaillement.

10. Dispositif de remplissage selon l'une quelconque des revendications précédentes 6 à 9, **caractérisé en ce que** le doigt coulissant (50) et la trappe (46) sont montés sur un bol (48) qui est fixé sur la carrosserie du véhicule et au fond duquel débouche l'orifice supérieur (18) de la tête de remplissage (12).

## Patentansprüche

1. Vorrichtung zum Auffüllen eines Kraftstoffbehälters für ein Kraftfahrzeug von dem Typ, der einen Füllkopf (12) aufweist, der mit einer oberen Öffnung (18) zum Einführen eines Rohres einer Tankpistole in die Vorrichtung versehen ist, von dem Typ, bei dem die Vorrichtung (10) eine äußere Klappe (46) aufweist, die zwischen einer Sperrposition, in der sie die obere Öffnung (18) verdeckt und einer Betankungsposition, in der sie den Zugang zur oberen Öffnung (18) freigibt, beweglich ist, von dem Typ, bei dem die obere Öffnung (18) dazu bestimmt ist, von einer Verschlußklappe (20) abgesperrt zu werden, die bezüglich der Vorrichtung (10) zwischen einer Öffnungsposition und einer Schließposition beweglich ist, in der sie die obere Öffnung der Vorrichtung (10) versperrt, und von dem Typ. bei dem Mittel zum Verriegeln (28) der Verschlußklappe (20) in der Schließposition vorhanden sind, **dadurch gekennzeichnet, daß** die Mittel zum Verriegeln (28) der Verschlußklappe (20) von der Klappe (46) so gesteuert sind, daß sie das Verriegeln der Verschlußklappe (20) bewirken, wenn die Klappe (46) in der Sperrposition ist, und das Entriegeln der Verschlußklappe (20) bewirken, wenn die Verschlußklappe in Betankungsposition ist.

2. Vorrichtung zum Auffüllen gemäß Anspruch 1, **dadurch gekennzeichnet, daß** die Mittel zum Verriegeln einen Riegel (28) aufweisen, der beweglich bezüglich des Füllkopfes (12) der Vorrichtung (10) zwischen einer Entriegelungsposition und einer Verriegelungsposition montiert ist, in der der Riegel (28) ein aktives Ende (30) aufweist, das in einer entsprechenden Aufnahme (32) der Verschlußklappe (20) gefangen ist.

3. Vorrichtung zum Auffüllen gemäß Anspruch 2, **dadurch gekennzeichnet, daß** der Riegel (20) federnd in seine Verriegelungsposition rückgestellt wird.

4. Vorrichtung zum Auffüllen gemäß einem der Ansprüche 1 oder 2, **dadurch gekennzeichnet, daß** der Riegel (28) schwenkbar auf dem Füllkopf (12) gelagert ist.

5. Vorrichtung zum Auffüllen gemäß Anspruch 4, **dadurch gekennzeichnet, daß** die Verschlußklappe (20) schwenkbar um eine Achse (A1) im wesentlichen senkrecht zu der Achse (A0) der oberen Öffnung (18) gelagert ist, und daß das aktive Ende (30) des Riegels auf einem Endstück (40) des Riegels (28) getragen ist, der im wesentlichen radial bezüglich der oberen Öffnung (18) schwenkbar ist, und daß der Riegel (28) einen Steuerarm (44) aufweist, der auf der Seite gegenüber dem radialen Endstück (40) bezüglich der Schwenkachse (A2) des Riegels (28) angeordnet ist.

6. Vorrichtung zum Auffüllen gemäß irgendeinem der vorstehenden Ansprüche, **dadurch gekennzeichnet, daß** die Klappe (46) auf den Riegel (28) über einen Zapfen (50) wirkt, der zwischen einer Sperrposition und einer Entsperrposition beweglich ist, in der er auf den Riegel (28) wirkt, um ihn zu seiner Entriegelungsposition hin zu belasten.

7. Vorrichtung zum Auffüllen gemäß Anspruch 6 in Kombination mit Anspruch 4, **dadurch gekennzeichnet, daß** der bewegliche Zapfen (50) verschieblich entlang einer Richtung senkrecht zur Schwenkachse (A2) des Riegels (28) angebracht ist.

8. Vorrichtung zum Auffüllen gemäß Anspruch 7, **dadurch gekennzeichnet, daß** die Klappe (46) im wesentlichen um eine Achse (A3) senkrecht zur Verschieberichtung des Zapfens (50) gelagert ist.

9. Vorrichtung zum Auffüllen gemäß einem der vorstehenden Ansprüche 6 oder 7, **dadurch gekennzeichnet, daß** der verschiebliche Zapfen (50) federnd zu seiner Sperrposition mitgenommen wird und daß er zu seiner Entsperrposition hin durch die Klappe (46) belastet ist, wenn sie in ihre Betankungsposition gebracht wird.

10. Vorrichtung zum Auffüllen gemäß einem der vorstehenden Ansprüche 6 oder 9, **dadurch gekennzeichnet, daß** der verschiebliche Zapfen (50) und die Klappe (46) auf einer Schale (48) montiert sind, die auf der Karosserie des Kraftfahrzeuges befestigt ist und in deren Boden die obere Öffnung (18) des Füllkopfes (12) mündet.

## Claims

1. Device for filling a fuel tank for a motor vehicle, of the type including a filling head (12) which is provided with an upper orifice (18) for the introduction into the device (10) of a lance of a refuelling gun, of the type in which the device (10) includes an external trap-door (46) which is mobile between a blocking position in which it covers the upper orifice (18) and a refuelling position in which it frees access to the upper orifice (18), of the type in which the upper orifice (18) is intended to be closed by a shutter (20) which is mobile relative to the device (10) between an open position and a closed position in which it closes the upper orifice of the device (10), and of the type in which means (28) are provided for locking the shutter (20) in the closed position,
**characterised by** the fact that the means (28) for locking the shutter (20) are controlled by the trap-door (46) to cause locking of the shutter (20) when the trap-door (46) is in the blocking position and to cause unlocking of the shutter (20) when the trap-door (46) is in the refuelling position.

2. Filling device as described in claim 1, **characterised by** the fact that the locking means include a latch (28) which is mounted mobile relative to the filling head (12) of the device (10) between an unlocking position and a locking position in which the latch (28) includes an active end (30) which is engaged in a corresponding housing (32) in the shutter (20).

3. Filling device as described in claim 2, **characterised by** the fact that the latch (20) is returned elastically towards its locking position.

4. Filling device as described in one of claims 1 or 2, **characterised by** the fact that the latch (28) is hinged on the filling head (12).

5. Filling device as described in claim 4, **characterised by** the fact that the shutter (20) is hinged about an axis (A1) substantially perpendicular to the axis (A0) of the upper orifice (18), by the fact that the active end (30) of the latch (28) is carried by a section (40) of the latch (28) which is arranged substantially radially relative to the upper orifice (18), and by the fact that the latch (28) includes an operating arm (44) which is arranged on the side opposite to the radial section (40) relative to the hinge axis (A2) of the latch (28).

6. Filling device as described in any one of the preceding claims, **characterised by** the fact that the trap-door (46) acts on the latch (28) by means of a finger (50) which is mobile between a blocking position and an unblocking position in which it acts on the latch (28) to bias it towards its unlocking position.

7. Filling device as described in claim 6 taken in combination with claim 4, **characterised by** the fact that the mobile finger (50) is mounted to slide in a direction perpendicular to the hinge axis (A2) of the latch (28).

8. Filling device as described in claim 7, **characterised by** the fact that the trap-door (46) is hinged substantially about an axis (A3) perpendicular to the direction of sliding of the finger (52).

9. Filling device as described in any one of the preceding claims 6 or 7, **characterised by** the fact that the sliding finger (50) is returned elastically towards it blocking position and by the fact that it is biased towards its unblocking position by the trap-door (46) when it is brought towards its refuelling position.

10. Filling device as described in any one of the preceding claims 6 to 9, **characterised by** the fact that the sliding finger (50) and the trap-door (46) are mounted on a bowl (48) which is fixed onto the bodywork of the vehicle and at the bottom of which opens the upper orifice (18) of the filling head (12).
